(19) **Europäisches Patentamt / European Patent Office / Office européen des brevets**

(11) **EP 4 003 933 B1**

(12) **FASCICULE DE BREVET EUROPEEN**

(45) Date de publication et mention de la délivrance du brevet:
**20.09.2023 Bulletin 2023/38**

(21) Numéro de dépôt: **20767596.8**

(22) Date de dépôt: **23.07.2020**

(51) Classification Internationale des Brevets (IPC):
**C04B 28/00** (2006.01)

(52) Classification Coopérative des Brevets (CPC):
(C-Sets disponibles)
**C04B 28/006;** C04B 2111/00129;
C04B 2111/00146; C04B 2111/00215;
C04B 2111/00482; C04B 2111/0075; Y02P 40/10;
Y02W 30/91 (Cont.)

(86) Numéro de dépôt international:
**PCT/IB2020/056943**

(87) Numéro de publication internationale:
**WO 2021/014397 (28.01.2021 Gazette 2021/04)**

(54) **COMPOSITION POUR LA FABRICATION DE REVETEMENTS, OU DE PIECES COULEES OU EXTRUDEES, PROCEDE DE FABRICATION CORRESPONDANT, ET REVETEMENTS ET PIECES COULEES OU EXTRUDEES OBTENUS**

ZUSAMMENSETZUNG ZUR HERSTELLUNG VON BESCHICHTUNGEN, GUSSSTÜCKEN ODER EXTRUDIERTEN TEILEN, ENTSPRECHENDES HERSTELLUNGSVERFAHREN UND BESCHICHTUNGEN, GUSSSTÜCKE ODER EXTRUDIERTE TEILE

COMPOSITION FOR PRODUCING COATINGS, CASTINGS OR EXTRUDED PARTS, CORRESPONDING PRODUCTION METHOD, AND COATINGS, CASTINGS OR EXTRUDED PARTS OBTAINED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2019 FR 1908372**

(43) Date de publication de la demande:
**01.06.2022 Bulletin 2022/22**

(73) Titulaires:
• **Université de Limoges**
**87032 Limoges (FR)**
• **Centre national de la recherche scientifique**
**75016 Paris (FR)**
• **GAT**
**87069 Limoges (FR)**

(72) Inventeurs:
• **ROSSIGNOL, Sylvie**
**87570 Rilhac Rancon (FR)**
• **FARGES, Rémi**
**19700 Seilhac (FR)**
• **OGER, Pascal**
**94260 Fresnes (FR)**

(74) Mandataire: **Cabinet Chaillot**
**16/20, avenue de l'Agent Sarre**
**B.P. 74**
**92703 Colombes Cedex (FR)**

(56) Documents cités:
**WO-A1-2016/156722 WO-A2-2011/020975**

• **NATALI A ET AL: "Novel fiber-reinforced composite materials based on sustainable geopolymer matrix", PROCEDIA ENGINEERING, vol. 21, 2011, pages 1124-1131, XP028340449, ISSN: 1877-7058, DOI: 10.1016/J.PROENG.2011.11.2120 [extrait le 2011-12-13]**

- TCHADJIE L N ET AL: "Enhancing the reactivity of aluminosilicate materials toward geopolymer synthesis", JOURNAL OF MATERIALS SCIENCE, KLUWER ACADEMIC PUBLISHERS, DORDRECHT, vol. 53, no. 7, 14 décembre 2017 (2017-12-14), pages 4709-4733, XP036398204, ISSN: 0022-2461, DOI: 10.1007/S10853-017-1907-7 [extrait le 2017-12-14]
- POUHET RAPHAËLLE ET AL: "Alkali-silica reaction in metakaolin-based geopolymer mortar", MATERIALS AND STRUCTURES, LONDON, GB, vol. 48, no. 3, 16 octobre 2014 (2014-10-16), pages 571-583, XP035441391, ISSN: 1359-5997, DOI: 10.1617/S11527-014-0445-X [extrait le 2014-10-16]
- PRUD'HOMME ELODIE ET AL: "Defining existence domains in geopolymers through their physicochemical properties", APPLIED CLAY SCIENCE, ELSEVIER, AMSTERDAM, NL, vol. 73, 11 janvier 2013 (2013-01-11), pages 26-34, XP028529959, ISSN: 0169-1317, DOI: 10.1016/J.CLAY.2012.10.013
- QING WANG ET AL: "Factors Influencing Bonding Strength of Geopolymer-aggregate Interfacial Transition Zone", ADVANCED MATERIALS RESEARCH; [ADVANCED MATERIALS RESEARCH; ISSN 1022-6680; VOL. 174], SCIENTIFIC.NET, CH , vol. 224 1 janvier 2011 (2011-01-01), pages 1-7, XP009524245, ISSN: 1022-6680, DOI: 10.4028/WWW.SCIENTIFIC.NET/AMR.224.1 Extrait de l'Internet: URL:https://doi.org/10.4028/www.scientific .net/AMR.224.1?nosfx=y
- Pouhet Raphaëlle: "Formulation and durability of metakaolin-based geopolymers", Doctorat de l'Université de Toulouse, 25 June 2015 (2015-06-25), pages 1-264, XP055815269, Toulouse, France Retrieved from the Internet: URL:https://tel.archives-ouvertes.fr/tel-0 1297848/document [retrieved on 2021-06-17]

Remarques:
  Le dossier contient des informations techniques présentées postérieurement au dépôt de la demande et ne figurant pas dans le présent fascicule.

(52)  Classification Coopérative des Brevets (CPC):
  (Cont.)

  C-Sets
  C04B 28/006, C04B 12/04, C04B 14/06,
  C04B 14/062, C04B 14/106, C04B 14/28,
  C04B 14/30, C04B 14/303, C04B 16/0633,
  C04B 16/065, C04B 40/02, C04B 2103/32;
  C04B 28/006, C04B 12/04, C04B 14/06,
  C04B 14/106, C04B 14/28, C04B 14/303,
  C04B 16/0633, C04B 16/065, C04B 18/146,
  C04B 40/02, C04B 2103/32, C04B 2103/54

**Description**

La présente invention concerne une composition pour la fabrication de revêtements, en particulier de revêtements pour les espaces urbains et le domaine routier, ou de pièces coulées ou extrudées, telles que plaques, carreaux et dalles. L'invention porte également sur un procédé de fabrication de ces revêtements ou pièces coulées ou extrudées, ainsi que sur les revêtements et pièces coulées ou extrudées ainsi obtenus.

Le domaine de l'invention est donc celui de la technique routière, de la construction, des bâtiments et des travaux publics.

Dans le domaine des revêtements routiers, les enrobés coulés à froid (ECF) sont des revêtements bitumineux ultra-minces essentiellement utilisés pour les réseaux dits secondaires qui représentent 97,9 % du réseau routier de France métropolitaine. Leur rôle est de protéger la structure de la chaussée et d'apporter une bonne adhérence. Ils sont de plus en plus utilisés de par leurs aspects économiques et écologiques. En effet, leur application en couches de l'ordre du centimètre à température ambiante permet de réaliser une économie de matière et d'énergie. Par ailleurs, la cohésion du matériau étant rapide, la remise en circulation est effectuée en moins de deux heures.

Les granulats destinés à la réalisation de revêtements routiers sont des produits normalisés. Les dispositions normatives en vigueur proviennent des normes européennes sur les granulats pour enrobés bitumineux et enduits superficiels (EN 13043) et de la norme NF P 18-545.

Les enjeux environnementaux de 2020 visent à réduire d'au moins 20 % les émissions de gaz à effet de serre. Actuellement, la phase liante des revêtements routiers est principalement composée d'émulsions de bitume, à savoir de produits issus de la pétrochimie.

Les présents inventeurs ont recherché une solution écologique et de mise en oeuvre aisée pour remplacer les matériaux bitumineux afin de diminuer les émissions de gaz à effet de serre, et proposent, selon la présente invention, d'avoir recours à des liants géopolymères en substitution des émulsions de bitume pour l'élaboration de revêtements appliqués ou posés sur un support tel qu'un sol ou une paroi, tels que les revêtements routiers ou pour espaces urbains, ainsi que pour la fabrication de pièces coulées ou extrudées tels que des plaques, dalles ou carreaux.

Il est apparu que les revêtements à liants géopolymères possèdent les avantages inattendus suivants :

- ils assurent la protection et l'imperméabilité des supports ;
- ils sont minéraux ou majoritairement minéraux, réalisés et mis en forme à température ambiante et n'émettent pas de composés organiques volatils (COV) ;
- ils présentent naturellement une couleur claire associée à une valeur d'albédo élevée, ce qui permet de réduire le phénomène d'îlots de chaleur ;
- ils résistent au rayonnement ultraviolet et à des cycles de gel-dégel.

Des compositions de géopolymères sont connues par les documents WO2016/156722 A, WO2011/020975 A, ainsi que par R. Pouhet" Formulation and durability of metakaolin-based geopolymers", Doctorat de l'Université de Toulouse, 25 juin 2015, pages 1-264.

Cependant, les liants géopolymères doivent présenter une tenue mécanique satisfaisante et dans le cadre de l'application d'un revêtement de faible épaisseur, par exemple une épaisseur inférieure à 1 cm, les liants géopolymères doivent présenter des propriétés satisfaisantes de malaxage des matières premières qui constituent ledit liant et d'application homogène du liant géopolymère et des granulats qu'il contient.

De plus, les matériaux obtenus selon l'invention, à liants géopolymères, peuvent se présenter aussi sous forme de pièces coulées ou extrudées telles que des plaques, dalles ou carreaux ayant les mêmes propriétés favorables.

La présente invention a donc d'abord pour objet une composition pour la fabrication de revêtements destinés à être appliqués ou posés sur un support tel qu'un sol ou une paroi, ou de pièces coulées ou extrudées telles que des plaques, dalles ou carreaux, caractérisée par le fait qu'elle comporte :

A. au moins un métakaolin ;
B. une solution aqueuse alcaline d'au moins un silicate de métal alcalin ; et
C. un granulat,

les constituants (A) et (B) étant destinés à former, lorsqu'ils sont mis en contact, un liant géopolymère pour le granulat (C),
le rapport molaire silicium/métal alcalin du mélange des constituants (A) et (B) étant compris entre 2,05 et 2,85.

Si le liant géopolymère, c'est-à-dire le mélange des constituants (A) et (B), présente un rapport molaire silicium/métal alcalin inférieur à 2,05, alors ledit liant géopolymère forme un matériau non consolidé qui se présente sous la forme d'un gel stratifié avec deux couches distinctes, l'une pour le constituant (A) et l'autre pour le constituant (B).

Ce liant ne présente aucune tenue mécanique et en particulier ne peut pas servir à former un revêtement.

Si le liant géopolymère présente un rapport molaire silicium/métal alcalin supérieur à 2,85, alors ledit liant présente une viscosité élevée qui empêche le bon malaxage des constituants (A) et (B) ainsi que l'application homogène d'un revêtement ayant une faible épaisseur, par exemple, inférieure à 1 cm.

Egalement, de façon générale, un liant géopolymère présentant un rapport molaire silicium/métal alcalin supérieur à 2,85, ne présente pas en lui-même une bonne tenue mécanique et nécessite d'être additivé pour améliorer lesdites propriétés mécaniques du liant.

Le ou les métakaolins (A) peuvent avantageusement présenter un rapport molaire Si/ Al compris entre 0,95 et 1,50, une granulométrie comprise entre 5 et 50 μm et peuvent avoir été produits au four rotatif ou par la méthode flash.

La composition peut comporter également :
(A1) un réactif apte à modifier le ou les métakaolins (A) pour faciliter la dissolution des espèces en présence du ou des silicates de métal alcalin de (B), ledit réactif étant au moins l'un parmi un hydroxyde d'aluminium et un dioxyde de silicium.

Il a également été observé que l'ajout d'un réactif (A1) permet de renforcer la tenue mécanique si besoin était, et d'éviter une fissuration dans le revêtement final ou la plaque obtenue.

A la fois un hydroxyde d'aluminium et un dioxyde de silicium peuvent être présents, le rapport massique hydroxyde d'aluminium / dioxyde de silicium étant notamment compris entre 0,5 et 1,7, bornes incluses.

Le ou les silicates de métaux alcalins (B) sont notamment choisis parmi un silicate de potassium ou un silicate de sodium.

Le rapport molaire silicium/métal alcalin ou métaux alcalins du ou des silicates du constituant (B) est notamment compris entre 0,4 et 0,9, bornes incluses, et notamment entre 0,5 et 0,75, bornes incluses.

Le granulat (C) peut être minéral ou organique (matière plastique, caoutchouc). Il peut notamment être constitué par au moins l'un parmi :

- le sable calcaire ayant notamment une granulométrie de 0-4 mm ;
- le sable alluvionnaire ayant notamment une granulométrie de 0-2 mm ;
- le sable de carrière ayant notamment une granulométrie de 0-2 mm ; et
- le gravillon de carrière ayant notamment une granulométrie de 2-4 mm.

Les composants (A), (B) et (C) peuvent être présents à raison de :

- 6,5 à 18,5 parties en poids, en particulier 10,0 à 15,0 parties en poids de (A) ;
- 8,5 à 23,0 parties en poids, en particulier 11,0 à 15,0 parties en poids de (B) ;
- 58,5 à 85,0 parties en poids, en particulier 70,0 à 79,0 parties en poids de (C) ;

pour 100 parties en poids de (A)+(B)+(C),
le composant (A1), s'il est présent, étant introduit à raison de jusqu'à 30 parties en poids pour 100 parties en poids de (A).

La composition selon l'invention peut comporter une quantité d'eau supplémentaire dont au moins une partie a servi d'eau d'humectation du granulat (C) lors de la formation du revêtement ou de la pièce coulée ou extrudée, la quantité d'eau totale étant de 3,0 à 8,0 parties en poids pour 100 parties en poids de (C).

La composition selon l'invention peut comporter en outre au moins un additif inerte (D) choisi parmi :

(D1) les fibres, telles que les fibres de polypropylène et les fibres acryliques, à raison notamment de 0,05 à 0,5 partie en poids, en particulier de 0,1 partie en poids, pour 100 parties en poids de (C) ;
(D2) les charges minérales, telles que les oxydes métalliques colorants ou non, notamment dans une quantité allant jusqu'à 5 parties en poids pour 100 parties en poids de (A)+(B) ;
(D3) les plastifiants ou super-plastifiants, tels que les réducteurs d'eau et/ou les fluidifiants, à raison de 0,1 à 0,6 partie en poids, en particulier de 0,4 partie en poids, pour 100 parties en poids de (A).

Les constituants (A) et (B) sont notamment choisis pour présenter, lorsqu'ils sont mis en contact l'un avec l'autre, une viscosité de 1,0 à 25,0 Pa.s, telle que mesurée à l'aide d'un viscosimètre Brookfield DV2T LV muni d'un mobile V-73 à ailettes pour les mesures de viscosité jusqu'à 5 Pa.s et d'un mobile V-74 à ailettes pour les mesures de viscosité supérieure à 5 Pa.s.

La présente invention concerne également un procédé de fabrication de revêtements destinés à être appliqués ou posés sur un support tel qu'un sol ou une paroi, ou de pièces coulées ou extrudées telles que des plaques, dalles ou carreaux à partir d'une composition telle que définie ci-dessus, caractérisé par le fait qu'il comporte les étapes consistant à :

- mélanger le constituant (A) et le constituant (C), et le cas échéant (A1) ; et
- le cas échéant, incorporer le ou les additifs inertes (D) ;
- incorporer le constituant (B) ;
- effectuer la mise en forme du mélange résultant :

  - par coulage dans un moule ou par extrusion pour obtenir par durcissement à la température ambiante une pièce respectivement coulée ou extrudée, telle qu'une plaque, un carreau, une dalle ; ou
  - par épandage sur un support, tel qu'une chaussée, une infrastructure de chaussée, une voie, un chemin, pour obtenir par durcissement à la température ambiante un revêtement ; ou
  - par projection sur un support pour obtenir un revêtement après durcissement,

l'épaisseur du revêtement étant notamment comprise entre 0,1 et 20,0 cm, par exemple entre 0,3 et 1 cm pour un revêtement de type routier et l'épaisseur de la pièce coulée ou extrudée étant notamment comprise entre 0,5 et 30,0 cm.

La présente invention a également pour objet les revêtements, tels que des revêtements routiers ou revêtements pour espaces urbains, et les pièces coulées ou extrudées telles que plaques, carreaux ou dalles, obtenus à partir de la composition telle que définie ci-dessus, ou par le procédé tel que défini ci-dessus.

Les Exemples suivants illustrent la présente invention sans toutefois en limiter la portée.

Dans ces Exemples, ont été utilisés les métakaolins notés M1, M2 et M5, les solutions aqueuses alcalines de silicate de potassium S1 et S3, les granulats notés S, Sa, Sc et Gc, et les fibres notées Fs, $F_{D4}$ et $F_{D6}$ :

M1 : métakaolin de couleur blanche, commercialisé par la Société IMERYS (France) sous la dénomination « Argical M1000 », obtenu par le procédé au four rotatif et ayant un rapport molaire Si/Al de 1,17 ;

M2 : métakaolin de couleur blanche, commercialisé par la Société IMERYS (France) sous la dénomination « Argical M1200 », obtenu par le procédé flash et ayant un rapport molaire Si/Al de 1,19 ;

M5 : métakaolin de couleur rose, commercialisé par la Société ARGECO (France) sous la dénomination « Argicem », obtenu par le procédé flash et ayant un rapport molaire Si/Al de 1,50 ;

S1 : solution aqueuse de silicate de potassium ayant un rapport molaire Si/K de 1,75, commercialisée par la Société Woellner (Allemagne) sous la dénomination « Geosil 52434 » ;

S3 : solution aqueuse de silicate de potassium ayant un rapport molaire Si/K de 0,67, commercialisée par la Société Woellner (Allemagne) sous la dénomination « Geosil 14515 » ;

S : sable calcaire concassé, de granulométrie comprise entre 0 et 4 mm, fourni par la Société RINCENT et provenant de la région parisienne ; ce sable a été lavé pour ôter la fraction fine inférieure à 63 $\mu$m ;

Sa : sable alluvionnaire roulé, de composition siliceuse sablo-argileuse, de granulométrie de 0-2 mm, provenant d'une carrière IMERYS située à Thédirac ;

Sc : sable concassé, de composition granito-diorite, de granulométrie de 0-2 mm, provenant d'une carrière de la Société AJIR AGREGATS située à Brigueuil ;

Gc : gravillon concassé de composition granito-diorite, de granulométrie de 2 à 4 mm, provenant d'une carrière de la Société AJIR AGREGATS située à Brigueuil ;

Fs : fibres de polypropylène, de longueur égale à 6 mm avec un diamètre de l'ordre de 34 $\mu$m et une densité de 0,91, commercialisées par la Société SIKA sous la dénomination « SikaCem Fibres-6 » ;

$F_{D4}$ : fibres acryliques, de longueur égale à 4 mm avec un diamètre de l'ordre de 27 $\mu$m et une densité de 1,18, commercialisées par la Société KREMER sous la dénomination « Dralon 4 mm » (dose 1kg) ; cela représente environ 373 000 fibres par gramme ;

$F_{D6}$ : fibres acryliques, de longueur égale à 6 mm avec un diamètre de l'ordre de 43 $\mu$m et une densité de 1,17, commercialisées par la Société KREMER sous la dénomination « Dralon 6 mm » (dose 1kg) ; cela représente environ 98 000 fibres par gramme ;

$Al(OH)_3$ : hydroxyde d'aluminium ($Al(OH)_3$) commercialisé par la Société MERCK ;

FDS : fumée de silice (FDS) commercialisée par la Société CABOT sous la dénomination « CAB-O-SIL® M-5 » ;

Plast : plastifiant réducteur d'eau pour béton et mortier, commercialisé par la Société DELTAPRO sous la dénomination « PLASTIFIANT BETON DELTAPRO » (dose 300 mL) ;

Superplast : superplastifiant fluidifiant pour béton et mortier, commercialisé par la Société DELTAPRO sous la dénomination « SUPERPLASTIFIANT POUR BETON ET MORTIER DELTAPRO » (dose 300 mL).

Exemples 1 à 31 : Formulation de revêtements/plaques selon l'invention et formation de revêtements

Mode opératoire général de préparation des revêtements ou plaques selon l'invention

1. Les granulats sont pesés de manière à constituer le mélange granulaire souhaité.

2. Par la suite, leur humidité est ajustée à environ 5% massique par rapport à la masse sèche.

3. Le ou les métakaolins et le cas échéant le réactif de modification du ou des métakaolins sont alors ajoutés au mélange granulaire et l'ensemble est malaxé à l'aide d'un malaxeur disposant d'un fouet à la vitesse 1 pendant 30 s. Cela permet d'homogénéiser les matières. Les plastifiants ou superplastifiants sont ajoutés au mélange.

4. Les fibres et/ou additifs inertes sont ajoutés progressivement.

5. Après la dispersion totale des fibres, la solution de silicate de potassium est ajoutée et malaxée à une vitesse 2 pendant 10 s, puis à une vitesse 3 pendant 1 min.

6. Le malaxeur est arrêté de manière à racler le bord du bol de malaxage pour décoller le mélange.

7. Le malaxage est alors effectué à la vitesse 3 pendant 1 min afin d'obtenir le mélange réactif de formation du revêtement géopolymère.

8. Il est possible de mettre en forme le mélange dans des moules ou bien de l'appliquer sur un support. La consolidation s'effectue à température ambiante, sans apport d'énergie.

On a préparé les formulations suivantes données dans le Tableau 1. Dans ce tableau :

- les constituants (A), (B) et (C) sont présents à raison de 100 parties en poids de (A)+(B)+(C) ;
- l'eau d'ajout est indiquée dans une quantité pour 100 parties en poids de (C) ;
- le réactif (A1) est indiqué dans une quantité pour 100 parties en poids de (A) ;
- les fibres (D1) sont indiquées dans une quantité pour 100 parties en poids de (C) ;
- les charges minérales (D2) sont indiquées dans une quantité pour 100 parties en poids de (A)+(B)
- le plastifiant/superplastifiant (D3) est indiqué dans une quantité pour 100 parties en poids de (A).

[Tableaux 1]

| Exemple | Composition du liant géopolymère | | | | Granulat (C) | Fibres (D1) | Charges minérales (D2) | Plastifiant / Superplastifiant (D3) | Rapport molaire Si/M du liant géopolymère |
|---|---|---|---|---|---|---|---|---|---|
| | (A) | (B) | Eau d'ajout | Réactif (A1) | | | | | |
| 1 | M1/13,78 | S3/17,31 | 5,27 | - | S/68,91 | $F_S$ /0,105 | - | - | 2,24 |
| 2 | M 1/9,84-M5/4,84 | S3/16,41 | 5,27 | - | S/68,91 | $F_S$ /0,105 | - | - | 2,49 |
| 3 | M 1/5,17-M5/10,51 | S3/15,41 | 5,27 | - | S/68,91 | $F_S$ /0,105 | - | - | 2,80 |
| 4* | M5/16,81 | S3/14,28 | 5,27 | - | S/68,91 | $F_S$ /0,105 | - | - | 3,20 |
| 5 | M1/13,82 | S3/17,03 | 6,14 | - | S/69,15 | $F_S$ /0,106 | - | - | 2,27 |
| 6 | M1/13,89 | S3/16,62 | 7,40 | - | S/69,49 | $F_S$ /0,106 | - | - | 2,32 |
| 7 | M 1/13,74 | S3/16,92-S1/0,6 1 | 5,27 | - | S/68,73 | $F_S$ /0,106 | - | - | 2,27 |
| 8 | M1/13,78 | S3/17,31 | 5,27 | - | S/68,91 | $F_{D4}$ /0,105 | - | - | 2,24 |

(suite)

| Exemple | Composition du liant géopolymère | | | | Granulat (C) | Fibres (D1) | Charges minérales (D2) | Plastifiant / Superplastifiant (D3) | Rapport molaire Si/M du liant géopolymère |
|---|---|---|---|---|---|---|---|---|---|
| | (A) | (B) | Eau d'ajout | Réactif (A1) | | | | | |
| 9 | M1/13,78 | S3/17,31 | 5,27 | - | S/68,91 | $F_{D6}$ / 0,105 | - | - | 2,24 |
| 10 | M 1/6 , 92 | S3/8, 73 | 5,27 | - | S/84,35 | $F_S$ / 0,0991 | - | - | 2,23 |
| 11 | M1/18,28 | S3/22 , 96 | 5,27 | - | S/58,76 | $F_S$ / 0,105 | - | - | 2,24 |
| 12 | M1/13,78 | S3/17,31 | 5,27 | - | Sa/13,78-Sc/13, 78-Gc/41,35 | $F_{D4}$ / 0,105 | - | - | 2,24 |
| 13 | M1/13,78 | S3/17,31 | 5,27 | - | Sa/22,97-Sc/22, 97-Gc/22,97 | $F_{D4}$ / 0,105 | - | - | 2,24 |
| 14 | M1/13,78 | S3/17,31 | 5,27 | - | Sa/13,79-Sc/27, 56-Gc/27,56 | $F_{D4}$ / 0,105 | - | - | 2,24 |
| 15 | M1/13,78 | S3/17,31 | 5,27 | - | Sa/13,78-Sc/20, 68-Gc/34,45 | $F_{D4}$ / 0,105 | - | - | 2,24 |
| 16 | M1/11,51 | S3/14,47 | 5,27 | - | Sa/14,80-Sc/44, 42-Gc/14,80 | $F_{D4}$ / 0,0983 | - | - | 2,24 |
| 17 | M1/11,51 | S3/14,47 | 5,27 | - | Sa/14,80-Sc/59, 22 | $F_{D4}$ / 0,0983 | - | - | 2,24 |
| 18 | M1/11,51 | S3/14,47 | 5,27 | - | Sa/14,80-Sc/29, 61-Gc/29,61 | $F_{D4}$ / 0,0983 | - | - | 2,24 |
| 19 | M1/11,51 | S3/14,47 | 5,27 | - | Sa/14,80-Sc/22, 21-Gc/37,01 | $F_{D4}$ / 0,0983 | - | - | 2,24 |
| 20 | M1/11,51 | S3/14,47 | 5,27 | - | Sa/7,40-Sc/59,2 2-Gc/7,40 | $F_{D4}$ / 0,0983 | - | - | 2,24 |
| 21 | M 1/5 , 08-M5/5 , 08 | S3/10 , 67 | 5,27 | - | Sa/15,83-Sc/31, 67-Gc/31,67 | $F_{D4}$ / 0,105 | - | - | 2,63 |
| 22* | M5/16,82 | S3/14 , 27 | 5,27 | - | Sa/13,79-Sc/27, 56-Gc/27,56 | $F_{D4}$ / 0,105 | - | - | 3,21 |

(suite)

| Exemple | Composition du liant géopolymère | | | | Granulat (C) | Fibres (D1) | Charges minérales (D2) | Plastifiant / Superplastifiant (D3) | Rapport molaire Si/M du liant géopolymère |
|---|---|---|---|---|---|---|---|---|---|
| | (A) | (B) | Eau d'ajout | Réactif (A1) | | | | | |
| 23 | M 1/9 , 56- M2/1 , 95 | S3/14 , 47 | 5,27 | - | Sa/14,80- Sc/29, 61- Gc/29,61 | $F_{D4}$ / 0,0983 | - | - | 2,24 |
| 24 | M1/1 2,41 | S3/15 , 61 | 5,27 | - | Sa/14,40- Sc/21, 59- Gc/35,99 | $F_{D4}$ / 0,101 | - | - | 2,24 |
| 25 | M1/1 2,41 | S3/15 , 61 | 5,27 | - | S/35,98- Sa/7,20- Sc/10,80- Gc/18, 00 | $F_{D4}$ / 0,101 | - | - | 2,24 |
| 26 | M1/1 2,42 | S3/15 , 61 | 5,27 | - | Sa/14,39- Sc/21, 59- Gc/35,99 | $F_{D6}$ / 0,376 | - | - | 2,24 |
| 27 | M1/1 2,42 | S3/15 , 61 | 5,27 | - | Sa/14,39- Sc/21, 59- Gc/35,99 | $F_{D4}$ / 0,102 | $Fe_2O_3$/ 2,99 | - | 2,24 |
| 28 | M1/1 2,42 | S3/15 , 61 | 5,27 | - | Sa/14,39- Sc/21, 59- Gc/35,99 | $F_{D4}$ / 0,101 | - | plast/0,41 8 | 2,24 |
| 29 | M1/1 2,42 | S3/15 , 61 | 5,27 | - | Sa/14,39- Sc/21, 59- Gc/35,99 | $F_{D4}$ / 0,101 | - | superplast /0,418 | 2,24 |
| 30 | M1/1 0,60 | S3/15 , 93 | 5,27 | Al(OH)$_3$/2,76- F DS/ 3,36 | Sa/14,69- Sc/22, 04- Gc/36,74 | $F_{D4}$ / 0,0997 | - | - | 2,06 |
| 31 | M1/1 0,59 | S3/15 , 93 | 5,27 | Al(OH)$_3$/12,0- F DS/ 10,8 | Sa/14,70- Sc/22, 05- Gc/36,73 | $F_{D4}$ / 0,101 | - | - | 2,24 |
| * :Exemple comparatif | | | | | | | | | |

Dans le tableau 1, les exemples 4 et 22 sont des exemples comparatifs qui présentent une rapport molaire Si/M du liant géopolymère respectivement de 3,20 et 3,21.

Dans le cas de ces exemples de référence, le liant géopolymère présente une viscosité élevée qui empêche le bon malaxage des constituants dudit liant et rend impossible l'application d'un revêtement d'épaisseur de 1 cm.

Caractérisations

a. Viscosité du liant géopolymère

La viscosité du liant géopolymère est déterminée à l'aide d'un viscosimètre Brookfield DV2T LV muni d'un mobile V-73 à ailettes ou d'un mobile V-74 à ailettes en fonction de la viscosité à mesurer. La vitesse de rotation choisie est fixée à 2,0 tpm. La précision de la valeur de la viscosité est de 0,3 Pas.

b. Mesure de déplacement linéaire (retrait)

Un déformomètre est utilisé pour la mesure du retrait selon la norme NF P15-433 « Méthodes d'essais des ciments - Détermination du retrait et du gonflement ». Une tige en « INVAR » (marque déposée) de 160 mm sert d'étalon. Elle est placée entre deux billes métalliques pour faire le zéro de l'appareil.

La première mesure est effectuée sur l'éprouvette au moment de son démoulage pour déterminer sa longueur initiale. La masse de l'éprouvette est également relevée. Les éprouvettes sont stockées pendant 24h dans une enceinte climatique régulée à une température de 20°C avec une humidité relative de 50% entre chaque mesure. Les valeurs de retrait ainsi que les masses sont mesurées chaque jour pour suivre l'évolution en fonction du temps.

c. Tenue à l'eau et le cycle gel-dégel

Un test de tenue à l'eau est réalisé pour les compositions les plus pertinentes. Deux échantillons sont nécessaires pour effectuer ce test. Le premier est placé dans l'air dans un tube fermé et sert de témoin. Le deuxième est plongé dans un tube rempli d'eau osmosée. L'aspect des deux échantillons ainsi que les valeurs de pH sont relevées en fonction du temps.

Le cycle de gel-dégel consiste à immerger les échantillons de revêtement dans un récipient rempli d'eau. Ce récipient est placé dans un congélateur à -21°C pendant 24h pour simuler une phase de gel et dans l'air ambiant à 20°C pendant 24h pour la phase de dégel. Ces deux phases sont répétées trois fois.

d. Conductivité thermique

Le principe de la mesure de conductivité thermique selon la méthode du disque chaud « hot disk » repose sur la mesure de l'élévation de température du matériau lorsqu'il est soumis à une augmentation de température. Cette mesure s'effectue en régime transitoire sur un matériau homogène, isotrope et de taille suffisamment grande pour pouvoir considérer le milieu comme infini. La sonde est constituée d'un enroulement de fil de Nickel qui permet à la fois de produire un flux de chaleur mais aussi de mesurer l'évolution de température. Les mesures de conductivité thermique des échantillons ont été réalisées selon la méthode du disque chaud « hot disk » sur un analyseur des propriétés thermiques Hot disk 1500 avec la sonde de 6,403 mm. La sonde est placée entre deux échantillons du matériau à caractériser. Le choix de la sonde dépend de la taille des échantillons et du matériau utilisé. Les mesures de conductivité thermique sont réalisées sur deux zones par matériau.

e. Colorimétrie et spectroscopie UV-Visible-NIR

Les mesures de colorimétrie et de spectroscopie UV-visible-NIR permettent de mesurer les propriétés optiques des revêtements géopolymères. Plus le revêtement géopolymère sera clair, plus les valeurs de clarté $L*$ et d'albédo seront élevées.

Les mesures de colorimétrie sont réalisées sur des échantillons plans de revêtement géopolymère à l'aide d'un appareil KONICA MINOLTA. La couleur des échantillons est définie dans l'espace colorimétrique CIELAB par ses coordonnées cartésiennes $L*a*b*$ et ses coordonnées cylindriques $L*c*h$ ($L*$ est la clarté, $a*$ la composante rouge-vert, $b*$ la composante jaune-bleu, $c*$ la saturation et $h$ le coin de teinte de couleur).

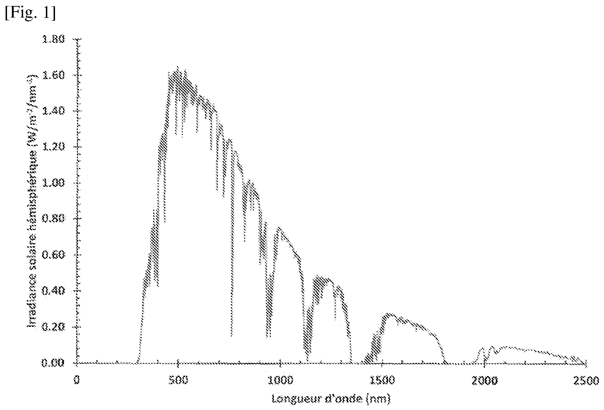

Les mesures de spectroscopie UV-visible-NIR sont effectuées sur un spectrophotomètre Varian Cary 5000. Les échantillons de revêtement géopolymère doivent présenter une surface plane et les mesures sont réalisées en réflectance, entre 200 et 2500 nm avec un pas de 1 nm, et une largeur de fente réduite. L'albédo du revêtement est calculé selon l'équation ci-après en pondérant les valeurs de réflectance à chaque longueur d'onde $\rho(\lambda)$ par le spectre de rayonnement solaire $\Phi S(\lambda)$ présenté à la Figure 1 (ASTM-G173) sur le domaine allant de 280 à 2500 nm.

[Fig.1] présente le spectre de rayonnement solaire sur le domaine allant de 280 à 2500 nm.

[Math.1]

$$Albédo\ (\%) = \frac{\int \rho(\lambda) * \Phi_S(\lambda) . d\lambda}{\int \Phi_S(\lambda) . d\lambda}$$

Résultats pour l'Exemple 1

On a appliqué sur les trois supports suivants :

- béton
- carotte d'enrobé bitumineux usagé
- enrobé bitumineux

un revêtement d'une épaisseur de 1 cm formé à partir de la formulation de l'Exemple 1.

Les revêtements sont ainsi consolidés après un stockage à une température de 20°C.

Leurs caractéristiques sont les suivantes :

- masse volumique apparente : 2,27 g/cm$^3$;
- ils résistent à l'eau et la valeur de pH se stabilise à 12,2 après 48h ;
- ils résistent à des attaques acide ([HCl]=10$^{-2}$ mol/L) avec une valeur de pH qui se stabilise à 11,2 après 48h ;
- la valeur de conductivité thermique du matériau déterminée par mesure au disque chaud est de l'ordre de 0,74 W/mK
- la valeur du module d'Young (illustrant la rigidité mécanique) est de l'ordre de 13,4 GPa ; et
- la couleur de l'échantillon est déterminée par colorimétrie dans l'espace L*a*b* : la clarté L* est de 61,52 %, le paramètre a* vaut 5,73 % et le paramètre b* vaut 21,07 %, ce qui correspond à une couleur beige clair.

Résultats pour tous les Exemples

Le tableau 2 indique les résultats de rugosité (+ très légèrement rugueux ; ++ légèrement rugueux ; +++ très rugueux ; ++++ extrêmement rugueux), de clarté (L*), de déplacement linéaire (+ très léger déplacement ; ++ léger déplacement ; +++ déplacement très important ; ++++ déplacement extrêmement important), tous ces résultats étant acceptables.

[Tableaux2]

| Exemple | Rugosité | Clarté (L*) | Déplacement linéaire | Maniabilité | Albédo (%) |
|---------|----------|-------------|----------------------|-------------|------------|
| 1 | + | 61,52 | +++ | +++ | 34,3 |
| 2 | + | 56,85 | ++ | ++ | 33,2 |
| 3 | ++ | 52,76 | ++ | ++ | 32,5 |
| 5 | + | 61,70 | +++ | +++ | 38,3 |
| 6 | + | 62,08 | ++++ | +++ | 43,0 |
| 7 | + | 62,42 | ++++ | ++++ | 41,4 |
| 8 | + | 61,57 | ++ | ++ | 35,0 |
| 9 | + | 63,33 | ++ | ++ | 34,9 |
| 10 | ++++ | 55,42 | + | + | 32,8 |
| 11 | + | 62,09 | +++ | +++ | 35,5 |
| 12 | + | 49,19 | +++ | ++ | 24,2 |
| 13 | + | 59,31 | +++ | +++ | 19,0 |
| 14 | + | 54,22 | ++ | ++ | 16,8 |
| 15 | + | 49,54 | ++ | ++ | 19,3 |
| 16 | + | 45,35 | +++ | +++ | 13,1 |
| 17 | + | 42,20 | ++++ | ++++ | 18,3 |
| 18 | ++ | 42,12 | ++ | ++ | 16,9 |
| 19 | ++ | 46,36 | ++ | ++ | 18,5 |
| 20 | + | 44,09 | ++++ | ++++ | 12,6 |

(suite)

| Exemple | Rugosité | Clarté (L*) | Déplacement linéaire | Maniabilité | Albédo (%) |
|---------|----------|-------------|----------------------|-------------|------------|
| 21 | ++++ | 37,72 | ++ | ++ | 12,8 |
| 23 | + | 46,16 | ++ | + | 15,4 |
| 24 | ++ | 54,86 | ++ | + | 22,9 |
| 25 | + | 58,74 | ++ | ++ | 25,1 |
| 26 | +++ | 49,83 | ++ | + | 20,3 |
| 27 | ++ | 52,05 | ++ | + | 32,0 |
| 28 | + | 60,34 | ++ | ++ | 24,9 |
| 29 | + | 59,37 | ++ | ++ | 22,9 |
| 30 | ++ | 66,00 | ++ | ++ | 30,6 |
| 31 | ++ | 56,42 | ++ | ++ | 21,7 |

**Revendications**

1. Composition pour la fabrication de revêtements destinés à être appliqués ou posés sur un support tel qu'un sol ou une paroi, ou de pièces coulées ou extrudées telles que des plaques, dalles ou carreaux, **caractérisée par le fait qu'**elle comporte :

    A. au moins un métakaolin ;
    B. une solution aqueuse alcaline d'au moins un silicate de métal alcalin ; et
    C. un granulat,
    les constituants (A) et (B) étant destinés à former, lorsqu'ils sont mis en contact, un liant géopolymère pour le granulat (C),
    le rapport molaire silicium/métal alcalin du mélange des constituants (A) et (B) étant compris entre 2,05 et 2,85.

2. Composition selon la revendication 1, **caractérisée par le fait que** le ou les métakaolins (A) ont un rapport molaire Si/Al compris entre 0,95 et 1,50, ont une granulométrie comprise entre 5 et 50 $\mu$m et ont été produits notamment au four rotatif ou par la méthode flash.

3. Composition selon l'une des revendications 1 ou 2, **caractérisée par le fait qu'**elle comporte également :
    (A1) un réactif apte à modifier le ou les métakaolins (A) pour faciliter la dissolution des espèces en présence du ou des silicates de métal alcalin de (B), ledit réactif étant au moins l'un parmi un hydroxyde d'aluminium et un dioxyde de silicium.

4. Composition selon la revendication 3, **caractérisée par le fait qu'**à la fois un hydroxyde d'aluminium et un dioxyde de silicium sont présents, le rapport massique hydroxyde d'aluminium / dioxyde de silicium étant notamment compris entre 0,5 et 1,7, bornes incluses.

5. Composition selon l'une des revendications 1 à 4, **caractérisée par le fait que** le ou les silicates de métaux alcalins (B) sont choisis parmi un silicate de potassium ou un silicate de sodium.

6. Composition selon l'une des revendications 1 à 5, **caractérisée par le fait que** le rapport molaire silicium/métal alcalin ou métaux alcalins du ou des silicates du constituant (B) est compris entre 0,4 et 0,9, bornes incluses, et notamment entre 0,5 et 0,75, bornes incluses.

7. Composition selon l'une des revendications 1 à 6, **caractérisée par le fait que** le granulat (C) est constitué par au moins l'un parmi :

    • le sable calcaire ayant notamment une granulométrie de 0-4 mm ;
    • le sable alluvionnaire ayant notamment une granulométrie de 0-2 mm ;

• le sable de carrière ayant notamment une granulométrie de 0-2 mm ; et
• le gravillon de carrière ayant notamment une granulométrie de 2-4 mm.

8. Composition selon l'une des revendications 1 à 7, **caractérisée par le fait que** les composants (A), (B) et (C) sont présents à raison de :

• 6,5 à 18,5 parties en poids, en particulier 10,0 à 15,0 parties en poids de (A) ;
• 8,5 à 23,0 parties en poids, en particulier 11,0 à 15,0 parties en poids de (B) ;
• 58,5 à 85,0 parties en poids, en particulier 70,0 à 79,0 parties en poids de (C) ;
pour 100 parties en poids de (A)+(B)+(C),
le composant (A1), s'il est présent, étant introduit à raison de jusqu'à 30 parties en poids pour 100 parties en poids de (A).

9. Composition selon l'une des revendications 1 à 8, **caractérisée par le fait qu'**elle comporte une quantité d'eau supplémentaire dont au moins une partie a servi d'eau d'humectation du granulat (C) lors de la formation du revêtement ou de la pièce coulée ou extrudée, la quantité d'eau totale étant de 3,0 à 8,0 parties en poids pour 100 parties en poids de (C).

10. Composition selon l'une des revendications 1 à 9, **caractérisée par le fait qu'**elle comporte en outre au moins un additif inerte (D) choisi parmi :

(D1) les fibres, telles que les fibres de polypropylène et les fibres acryliques, à raison notamment de 0,05 à 0,5 partie en poids, en particulier de 0,1 partie en poids, pour 100 parties en poids de (C) ;
(D2) les charges minérales, telles que les oxydes métalliques colorants ou non, notamment dans une quantité allant jusqu'à 5 parties en poids pour 100 parties en poids de (A)+(B) ;
(D3) les plastifiants ou super-plastifiants, tels que les réducteurs d'eau et/ou les fluidifiants, à raison de 0,1 à 0,6 partie en poids, en particulier de 0,4 partie en poids, pour 100 parties en poids de (A).

11. Composition selon l'une des revendications 1 à 10, **caractérisée par le fait que** les constituants (A) et (B) sont choisis pour présenter, lorsqu'ils sont mis en contact l'un avec l'autre, une viscosité de 1,0 à 25,0 Pa.s, telle que mesurée à l'aide d'un viscosimètre Brookfield DV2T LV muni d'un mobile V-73 à ailettes pour les mesures de viscosité jusqu'à 5 Pa.s et d'un mobile V-74 à ailettes pour les mesures de viscosité supérieure à 5 Pa.s.

12. Procédé de fabrication de revêtements destinés à être appliqués ou posés sur un support tel qu'un sol ou une paroi, ou de pièces coulées ou extrudées telles que des plaques, dalles ou carreaux à partir d'une composition telle que définie à l'une des revendications 1 à 11, **caractérisé par le fait qu'**il comporte les étapes consistant à :

• mélanger le constituant (A) et le constituant (C), et le cas échéant (A1) ; et
• le cas échéant, incorporer le ou les additifs inertes (D) ;
• incorporer le constituant (B) ;
• effectuer la mise en forme du mélange résultant :

• par coulage dans un moule ou par extrusion pour obtenir par durcissement à la température ambiante une pièce respectivement coulée ou extrudée telle qu'une plaque, un carreau, une dalle ; ou
• par épandage sur un support, tel qu'une chaussée, une infrastructure de chaussée, une voie, un chemin, pour obtenir par durcissement à la température ambiante un revêtement ; ou
• par projection sur un support pour obtenir un revêtement après durcissement,

l'épaisseur du revêtement étant notamment comprise entre 0,1 et 20,0 cm, par exemple entre 0,3 et 1 cm pour un revêtement de type routier et l'épaisseur de la pièce coulée ou extrudée étant notamment comprise entre 0,5 et 30,0 cm.

13. Revêtements, tels que revêtements routiers ou revêtements pour espaces urbains, ou pièces coulées ou extrudées telles que plaques, carreaux ou dalles, obtenus à partir de la composition telle que définie à l'une des revendications 1 à 11.

**Patentansprüche**

1. Zusammensetzung zur Herstellung von Beschichtungen, die ausgelegt sind, um auf einen Träger wie z. B. einen Boden oder eine Wand aufgebracht oder angebracht zu werden, oder Gussstücken oder extrudierten Teilen wie z. B. Platten, Bodenfliesen oder Wandbauplatten, **dadurch gekennzeichnet, dass** sie Folgendes umfasst:

   A. mindestens ein Metakaolin,
   B. eine alkaline wässrige Lösung mindestens eines alkalinen Metallsilikats; und
   C. ein Granulat
   wobei die Bestandteile (A) und (B) ausgelegt sind um, wenn sie miteinander in Kontakt gebracht werden, ein geopolymeres Bindemittel für das Granulat (C) zu bilden,
   wobei das Molverhältnis Silicium/alkalines Metall der Mischung der Bestandteile (A) und (B) im Bereich zwischen 2,05 und 2,85 liegt.

2. Zusammensetzung nach Anspruch 1, **dadurch gekennzeichnet, dass** das oder die Metakaolin (e) (A) ein Molverhältnis Si/Al aufweisen, das im Bereich zwischen 0,95 und 1,50 liegt, eine Granulometrie aufweisen, die im Bereich zwischen 5 und 50 $\mu$m liegt, und insbesondere im Drehofen oder durch das Flash-Verfahren hergestellt wurden.

3. Zusammensetzung nach einem der Ansprüche 1 oder 2, **dadurch gekennzeichnet, dass** sie Folgendes umfasst:
   (A1) ein Reagens, das ausgelegt ist, um das oder die Metakaoline (A) zu modifizieren, um die Auflösung der Spezies in Anwesenheit des oder der alkalinen Metallsilikate von (B) zu erleichtern, wobei das Reagens mindestens eines aus Aluminiumhydroxyd und Siliciumdioxid ist.

4. Zusammensetzung nach Anspruch 3, **dadurch gekennzeichnet, dass** gleichzeitig ein Aluminiumhydroxyd und ein Siliciumdioxid anwesend sind, wobei das Gewichtsverhältnis Aluminiumhydroxyd/Siliziumdioxid insbesondere im Bereich zwischen 0,5 und 1,7 liegt, Grenzen eingeschlossen.

5. Zusammensetzung nach einem der Ansprüche 1 bis 4, **dadurch gekennzeichnet, dass** das oder die alkalinen Metallsilikate (B) ausgewählt sind aus Kaliumsilikat oder Natriumsilikat.

6. Zusammensetzung nach einem der Ansprüche 1 bis 5, **dadurch gekennzeichnet, dass** das Molverhältnis Silicium/alkalines Metall oder alkaline Metalle des oder der Silicate des Bestandteils (B) im Bereich zwischen 0,4 und 0,9 liegt, Grenzen eingeschlossen, und insbesondere im Bereich zwischen 0,5 und 0,75, Grenzen eingeschlossen.

7. Zusammensetzung nach einem der Ansprüche 1 bis 6, **dadurch gekennzeichnet, dass** das Granulat (C) aus mindestens einem der Folgenden besteht:

   • Kalksand mit insbesondere einer Granulometrie von 0 - 4 mm;
   • Flusssand mit insbesondere einer Granulometrie von 0 - 2 mm;
   • Steinbruchsand mit insbesondere einer Granulometrie von 0 - 2 mm; und
   • Steinbruchkies mit insbesondere einer Granulometrie von 2 - 4 mm.

8. Zusammensetzung nach einem der Ansprüche 1 bis 7, **dadurch gekennzeichnet, dass** die Bestandteile (A), (B) und (C) anwesend sind in einer Menge von:

   • 6,5 bis 18,5 Gewichtsteilen, insbesondere 10,0 bis 15,0 Gewichtsteilen von (A);
   • 8,5 bis 23,0 Gewichtsteilen, insbesondere 11,0 bis 15,0 Gewichtsteilen von (B);
   • 58,5 bis 85,0 Gewichtsteilen, insbesondere 70,0 bis 79,0 Gewichtsteilen von (C);
   bei 100 Gewichtsteilen von (A)+(B)+(C,
   wobei der Bestandteil (A1), wenn er anwesend ist, in einer Menge von bis zu 30 Gewichtsteilen bei 100 Gewichtsteilen von (A) eingeführt wird.

9. Zusammensetzung nach einem der Ansprüche 1 bis 8, **dadurch gekennzeichnet, dass** sie eine zusätzliche Menge Wasser umfasst, von der mindestens ein Teil als Befeuchtungswasser des Granulats (C) bei der Bildung der Beschichtung des Gussstücks oder extrudierten Teils gedient hat, wobei die Gesamtmenge an Wasser 3,0 bis 8,0 Gewichtsteile bei 100 Gewichtsteilen von (C) ist.

10. Zusammensetzung nach einem der Ansprüche 1 bis 9, **dadurch gekennzeichnet, dass** sie außerdem mindestens einen inerten Zusatzstoff (D) umfasst, der aus Folgendem ausgewählt ist:

(D1) Fasern, wie z. B. Polypropylenfasern und Acrylfasern in einer Menge von insbesondere 0,05 bis 0,5 Gewichtsteilen, besonders 0,1 Gewichtsteilen bei 100 Gewichtsteilen von (C);
(D2) mineralischen Füllstoffen wie z. B. metallischen Oxyden, färbend oder nicht, insbesondere in einer Menge, die bis zu 5 Gewichtsteilen bei 100 Gewichtsteilen von (A)+(B) reicht;
(D3) Weichmacher oder Superweichmacher, wie z. B. Wasserreduktionsmittel und/oder Verflüssiger in einer Menge von 0,1 bis 0,6 Gewichtsteilen, insbesondere von 0,4 Gewichtsteilen bei 100 Gewichtsteilen von (A).

**11.** Zusammensetzung nach einem der Ansprüche 1 bis 10, **dadurch gekennzeichnet, dass** die Bestandteile (A) und (B) ausgewählt sind um, wenn sie miteinander in Kontakt gebracht werden, eine Viskosität von 1,0 bis 25,0 Pa.s aufzuweisen, wie mit Hilfe eines Viskosimeters Brookfield DV2T LV, ausgestattet mit einem mobilen V-73 mit Flügeln für die Viskositätsmessungen bis 5 Pa.s. und einem mobilen V-74 mit Flügeln für die Viskositätsmessungen von mehr als 5 Pa.s.

**12.** Verfahren zur Herstellung von Beschichtungen, die ausgelegt sind, um auf einen Träger wie z. B. einen Boden oder eine Wand aufgebracht oder angebracht zu werden, oder Gussstücken oder extrudierten Teilen wie z. B. Platten, Bodenfliesen oder Wandbauplatten auf der Grundlage einer Zusammensetzung wie in einem der Ansprüche 1 bis 11 definiert, **dadurch gekennzeichnet, dass** es die Schritte umfasst, bestehend aus:

• Mischen des Bestanteils (A) und des Bestandteils (C) und gegebenenfalls (A1); und
• gegebenenfalls Einfügen des oder der inerten Zusatzstoffe (D);
• Einfügen des Bestandteils (B);
• Durchführen der Formgebung der sich ergebenden Mischung:
• durch Gießen in eine Form oder durch Extrudieren, um durch Aushärten bei Umgebungstemperatur jeweils ein Gussstück oder ein extrudiertes Teil zu erhalten, wie z. B. eine Platte, eine Wandbauplatte oder eine Bodenfliese; oder
• durch Verteilen auf einem Träger, wie z. B. einer Fahrbahn, einer Fahrbahninfrastruktur, einer Straße, einem Weg, um durch Aushärten bei Umgebungstemperatur eine Beschichtung zu erhalten,
• durch Projektion auf einen Träger, um eine Beschichtung nach dem Aushärten zu erhalten,

wobei die Dicke der Beschichtung insbesondere im Bereich zwischen 0,1 und 20,0 cm liegt, z. B. zwischen 0,3 und 1 cm bei einer Beschichtung vom Typ Straßenbelag, und wobei die Dicke des Gussstücks oder extrudierten Teils insbesondere im Bereich zwischen 0,5 und 30,0 cm liegt.

**13.** Beschichtungen wie z. B. Straßenbeschichtungen oder Beschichtungen für städtische Räume oder Gussstücke oder extrudierte Teile wie z. B. Platten, Wandbauplatten oder Bodenfliesen, erhalten auf der Grundlage der Zusammensetzung, wie in einem der Ansprüche 1 bis 11 definiert.

**Claims**

**1.** A composition for the manufacture of coatings intended to be applied to or laid on a support such as a ground or wall surface, or of cast or extruded parts such as panels, slabs or tiles, **characterized by** the fact that it comprises:

A. at least one metakaolin;
B. an aqueous alkaline solution of at least one alkali metal silicate; and
C. an aggregate,
the constituents (A) and (B) being intended, when placed in contact, to form a geopolymer binder for the aggregate (C),
the silicon/alkali metal molar ratio of the mixture of constituents (A) and (B) being between 2.05 and 2.85.

**2.** The composition according to claim 1, **characterized by** the fact that the metakaolin(s) (A) have a Si/Al molar ratio of between 0.95 and 1.50, have a particle size of between 5 and 50 $\mu$m, and were particularly produced in a rotary kiln or via flash technique.

**3.** The composition according to one of claims 1 or 2, **characterized by** the fact that it also comprises:
(A1) a reactant able to modify the metakaolin(s) (A) to facilitate dissolution of the species in the presence of the alkali metal silicate(s) of (B), said reactant being at least one from among an aluminium hydroxide and a silicon dioxide.

4. The composition according to claim 3, **characterized by** the fact that both an aluminium hydroxide and a silicon dioxide are present, the aluminium hydroxide/silicon dioxide weight ratio particularly being between 0.5 and 1.7, limits included.

5. The composition according to one of claims 1 to 4, **characterized by** the fact that the silicate(s) (B) of alkali metals are selected from among a potassium silicate or a sodium silicate.

6. The composition according to one of claims 1 to 5, **characterized by** the fact that the molar ratio of silicon/alkali metal or alkali metals of silicate(s) of constituent (B) is between 0.4 and 0.9, limits included, and in particular between 0.5 and 0.75, limits included.

7. The composition according to one of claims 1 to 6, **characterized by** the fact that the aggregate (C) is composed of at least one from among:

   • calcareous sand, particularly having a particle size of 0-4 mm;
   • alluvial sand, particularly having a particle size of 0-2 mm;
   • quarry sand, particularly having a particle size of 0-2 mm; and
   • quarry gravel, particularly having a particle size of 2-4 mm.

8. The composition according to one of claims 1 to 7, **characterized by** the fact that the components (A), (B) and (C) are contained in a proportion of:

   • 6.5 to 18.5 parts by weight, in particular 10.0 to 15.0 parts by weight of (A);
   • 8.5 to 23.0 parts by weight, in particular 11.0 to 15.0 parts by weight of (B);
   • 58.5 to 85.0 parts by weight, in particular 70.0 to 79.0 parts by weight of (C);
   per 100 parts by weight of (A)+(B)+(C),
   component (A1), if present, being included in an amount of up to 30 parts by weight per 100 parts by weight of (A).

9. The composition according to one of claims 1 to 8, **characterized by** the fact that it comprises an additional amount of water of which at least one part was used to wet the aggregate (C) when forming the coating or the cast or extruded part, the total quantity of water being from 3.0 to 8.0 parts by weight per 100 parts by weight of (C).

10. The composition according to one of claims 1 to 9, **characterized by** the fact that it further comprises at least one inert additive (D) selected from among:

    (D1) fibres, such as polypropylene fibres and acrylic fibres, in a proportion in particular of 0.05 to 0.5 part by weight, in particular of 0.1 part by weight per 100 parts by weight of (C);
    (D2) mineral fillers, such as metal oxides whether or not colourants, in particular in an amount of up to 5 parts by weight per 100 parts by weight of (A)+(B);
    (D3) plasticizers, or super-plasticizers, such as water reducers and/or fluidizers, in a proportion of 0.1 to 0.6 part by weight, in particular 0.4 part by weight per 100 parts by weight of (A).

11. The composition according to one of claims 1 to 10, **characterized by** the fact that the constituents (A) and (B) are chosen so that, when placed in contact with each other, they have a viscosity of 1.0 to 25.0 Pa.s, as measured using a Brookfield DV2T LV viscosimeter equipped with a V-73 vane spindle for measuring viscosity up to 5 Pa.s, and with a V-74 vane spindle for measuring viscosity greater than 5 Pa.s.

12. A method for the manufacture of coatings to be applied to or laid on a support such as a ground or wall surface, or of cast or extruded parts such as panels, slabs or tiles, from a composition such as defined in one of claims 1 to 11, **characterized by** the fact that it comprises the steps of:

    • mixing constituent (A) and constituent (C), and optionally (A1); and
    • optionally, incorporating the inert additive(s) (D) ;
    • incorporating constituent (B);
    • shaping the resulting mixture:

• by mould casting or via extrusion to obtain hardening at ambient temperature of a part respectively cast or extruded such as a panel, tile, slab; or
• by spreading over a support such as a roadway, roadway infrastructure, thoroughfare, pathway to obtain a coating by hardening at ambient temperature; or
• by spraying onto a support to obtain a coating after hardening,

the thickness of the coating particularly being between 0.1 and 20.0 cm, for example between 0.3 and 1 cm for coating of roadway type, and the thickness of the cast or extruded part particularly being between 0.5 and 30.0 cm.

**13.** Coatings such as roadway coatings or coatings for urban areas, or cast or extruded parts such as panels, tiles or slabs, obtained from the composition such as defined in one of claims 1 to 11.

[Fig. 1]

## RÉFÉRENCES CITÉES DANS LA DESCRIPTION

**Documents brevets cités dans la description**

- WO 2016156722 A

- WO 2011020975 A

**Littérature non-brevet citée dans la description**

- **R. POUHET.** Formulation and durability of metakaolin-based geopolymers. *Doctorat de l'Université de Toulouse,* 25 Juin 2015, 1-264